# EUROPEAN PATENT SPECIFICATION

(11) **EP 4 164 988 B1**
(45) Date of publication and mention of the grant of the patent: **19.03.2025**
(21) Application number: 21742488.6
(22) Date of filing: 14.06.2021
(51) Int. Cl.: C02F 1/00, C02F 1/34, C02F 1/48

(54) **DEVICE FOR TREATMENT OF LIQUIDS**
VORRICHTUNG ZUR FLÜSSIGKEITSBEHANDLUNG
APPAREIL POUR LE TRAITEMENT DE LIQUIDES

(30) Priority: 15.06.2020 IT 202000014218
(43) Date of publication of application: 19.04.2023
(73) Proprietor: OMITALY SRL, 20087 Robecco sul Naviglio (MI) (IT)
(72) Inventor: GALBIATI, Alessandro, 20087 Robecco sul Naviglio (Milano) (IT); GALBIATI, Massimo, 20087 Robecco sul Naviglio (Milano) (IT); GALBIATI, Andrea, 20013 Magenta (Milano) (IT); GALBIATI, Davide, 20011 Corbetta (Milano) (IT)
(74) Representative: Tansini, Elio Fabrizio
(86) International application number: PCT/IB2021/055214
(87) International publication number: WO 2021/255619

(56) References cited:
- EP-A1- 0 427 241
- EP-A1- 1 557 397
- EP-A1- 3 085 670
- EP-A2- 0 295 463
- EP-B1- 0 295 463
- EP-B1- 0 427 241
- EP-B1- 1 557 397
- EP-B1- 1 780 176
- EP-B1- 3 085 670
- CN-A- 112 871 004
- DE-A1- 19 857 730
- US-A1- 2016 185 624

## Description

### Technical field

The present invention relates to a device for water treatment. In particular, the invention relates to a hydrodynamic device for the treatment of water for civil and industrial use.

The device of the present invention is applied in the civil, industrial, agricultural, chemical, floricultural, sanitary food (human and veterinary) fields, for the treatment of water in the recreational field (swimming pools, spas, whirlpools) and in the field of environmental and ecological treatments.

In the following discussion, reference is made to a device for water treatment for ease of exposure, but the device described herein is adapted to the treatment of any other liquid.

### Prior art

Water intended for purification is withdrawn from the environment and subsequently treated specifically to ensure compliance with the quality limits established by law.

In detail, the water for civil or industrial use distributed to users can have high salinity, in particular, it can contain calcium salts, heavy metal residues, bacteria or other microorganisms and have a high viscosity.

Usually, the water distributed to users is treated with substances adapted to eliminate any bacterial load present therein and prevent the proliferation thereof. For example, chlorine is one of the most widely used substances to ensure the total absence of microorganisms harmful to man in drinking water, but it can make the taste and smell thereof very unpleasant. However, such substances added to the distributed water do not eliminate the presence of any suspended substances such as, for example, calcium salts and heavy metals.

The aforementioned suspended substances are harmful to both users and plants, for example heavy metals bind to vital cellular components and calcium salts form limestone residues, known to be harmful to both pipes and kidneys.

Furthermore, the presence of limestone reduces the solvent and wetting power of water, thus the cleaning capacity, which leads to the use of greater amounts of surfactants with a negative environmental impact.

For the reasons set out above, the need to remove said suspended substances is strongly felt. Therefore, in order to further improve the quality of water arriving from the water mains, various treatment devices are known.

For example, water treatment plants comprising different types of filtering elements arranged in succession are known.

Non-chemical devices using magnets capable of partially removing limestone and heavy metal residues in a more environmentally-friendly manner than the use of chemicals are also known. However, water treatment by means of magnets has a relatively low effect, which can be improved by producing a strong turbulence but which would increase hydraulic resistance and pressure loss. Another disadvantage of such devices is a strong dependence of the effectiveness of such devices on water hardness. EP 3 085 670 A1, DE 198 57 730 A1, EP 1 557 397 A1, EP 0 295 463 A2 and US 2016/185624 A1 disclose devices for water treatment.

### Object of the invention

The present invention relates to a device for water treatment as defined in the accompanying claims 1 and 13 and the preferred embodiments thereof disclosed in dependent claims 2 to 12, 14 and 15.

The Applicant has perceived that the device for water treatment in accordance with the present invention allows to reduce the pressure drops normally necessary to obtain the expected result. Another advantage of the present invention is to allow the non-use of external energy sources, both thermal and electrical.

A further advantage of the present invention is to allow a considerable reduction of the bacterial load.

Another advantage of the present invention is to allow a reduction of water viscosity.

A further advantage of the present invention is to transform calcium salts, making limestone less encrusting.

Another advantage of the present invention is to reduce surface tension and increase the wetting properties of water.

A further advantage of the present invention is to allow the creation of strong turbulence in the liquid flow, reducing hydraulic resistance and pressure loss.

Another advantage of the present invention is to reduce water clusters to groups of seven to eight molecules.

Another advantage of the present invention is the ease of installation in new or existing water treatment plants.

A further advantage of the present invention is that the device is simple and economical to make and assemble.

The technical effects/advantages mentioned, and other technical effects/advantages of the invention, will emerge in further detail from the description provided herein below of an example embodiment provided by way of approximate and non-limiting example with reference to the appended drawings.

### Brief description of the drawings

Additional features and advantages of the invention will become more apparent from the description which follows of a preferred embodiment and the variants thereof, provided by way of example with reference to the appended drawings, in which:

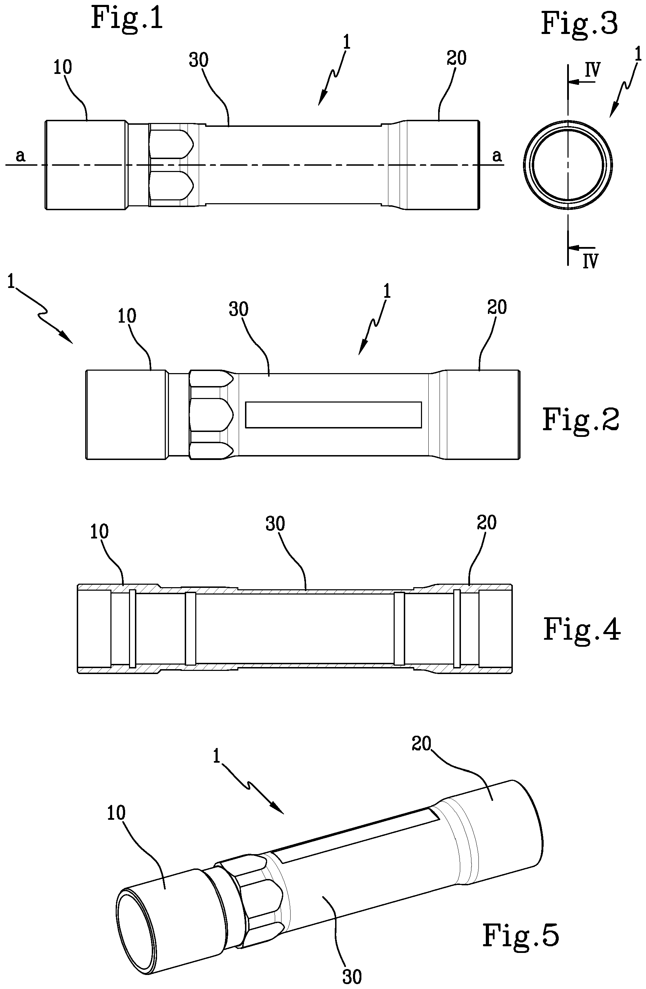

- figure 1 depicts a view of the outer casing of the device for water treatment;
- figure 2 depicts a top view of the casing of figure 1;
- figure 3 depicts an axial view of the casing of figure 1, from the water inlet part;
- figure 4 depicts a section along the line IV-IV of figure 3;
- figure 5 depicts a perspective view of the casing of figure 1;

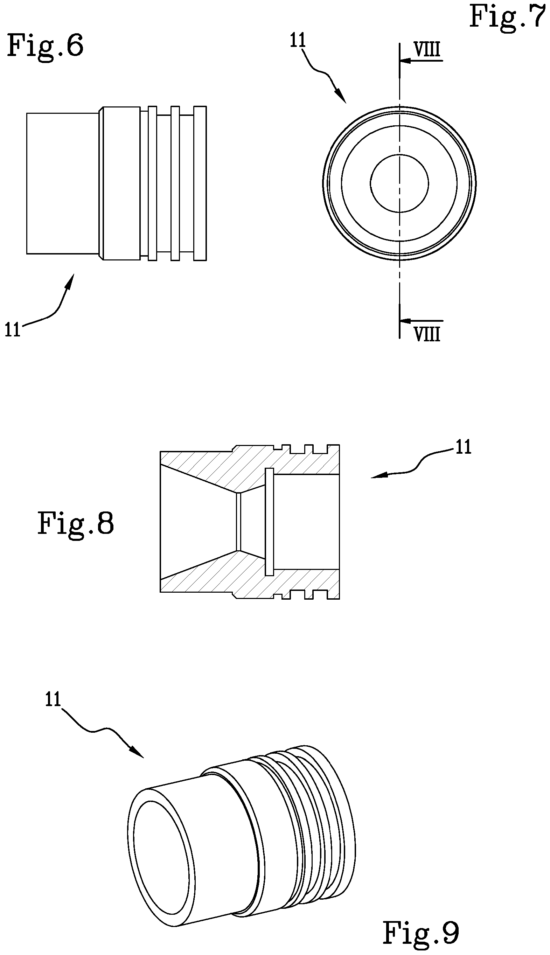

- figure 6 depicts the inlet fitting of the device of figure 1;
- figure 7 depicts an axial view of the fitting of figure 6 from which the water enters;
- figure 8 depicts a section along the line VIII-VIII of figure 7;
- figure 9 depicts a perspective view of the fitting of figure 6;

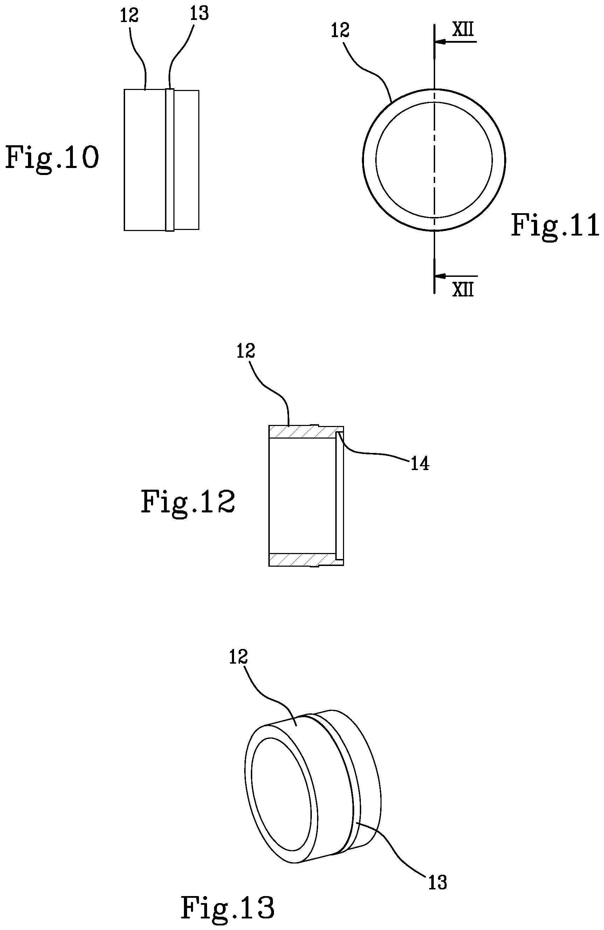

- figure 10 depicts the inlet locking fitting;
- figure 11 depicts an axial view of the fitting of figure 10;
- figure 12 depicts a section along the line XII-XII of figure 11;
- figure 13 depicts a perspective view of the fitting of figure 10;

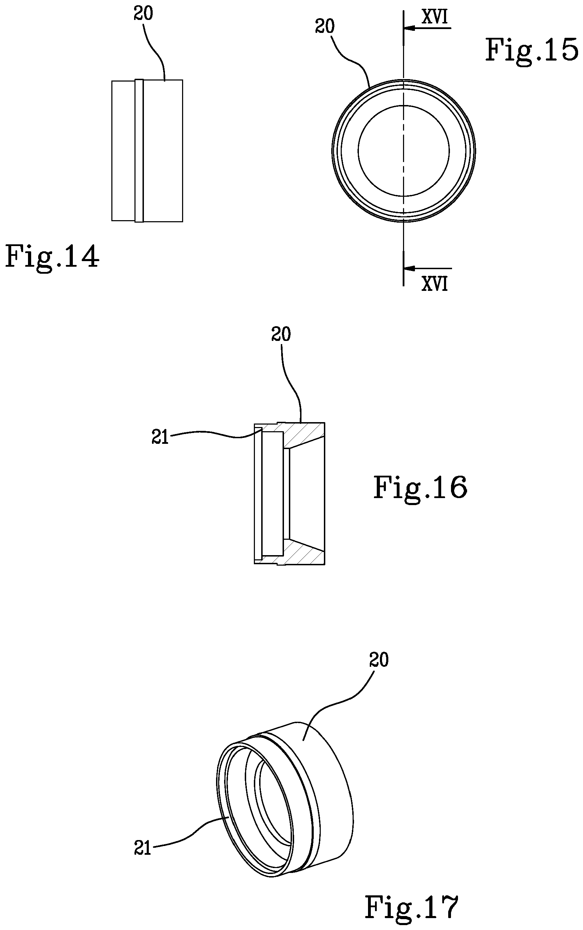

- figure 14 depicts the outlet locking fitting of the device of figure 1;
- figure 15 depicts an axial view, of the fluid outlet, of the fitting of figure 14;
- figure 16 depicts a section along the line XVI-XVI of figure 15;
- figure 17 depicts a perspective view of the fitting of figure 14;

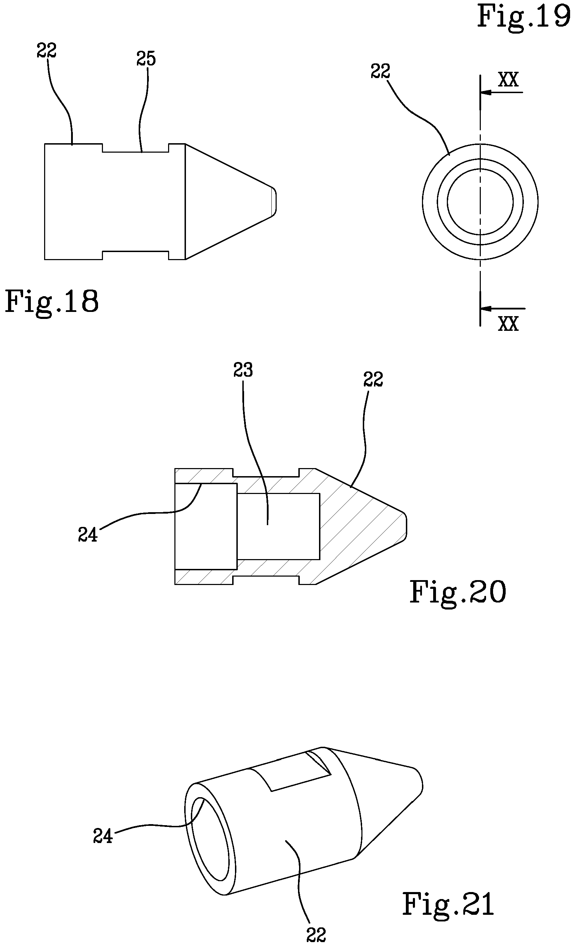

- figure 18 depicts the magnet carrying cap of the device of figure 1;
- figure 19 depicts an axial view of the cap of figure 18;
- figure 20 depicts a section along the line XX-XX of figure 19;
- figure 21 depicts a perspective view of the cap of figure 18;

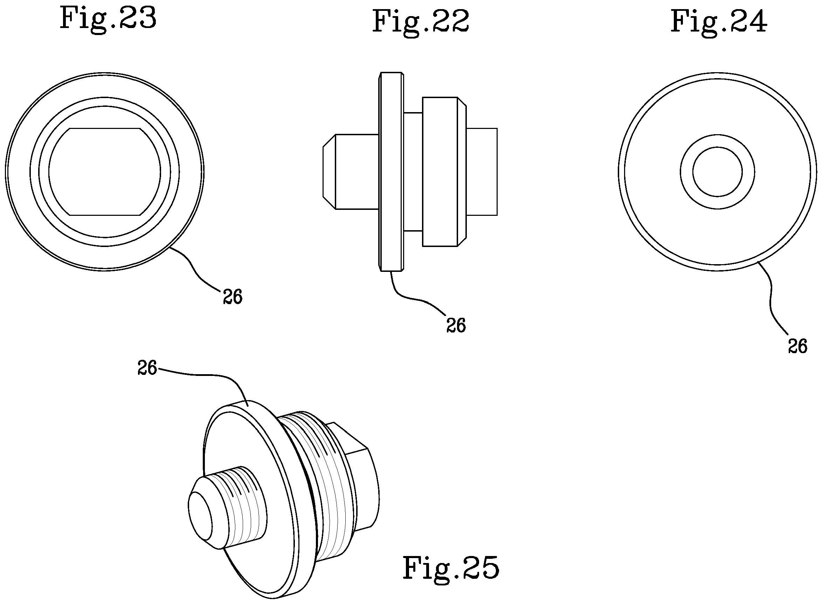

- figure 22 depicts the locking plug of the longitudinal centring element;
- figure 23 depicts a first axial view of the plug of figure 22;
- figure 24 depicts a second axial view of the plug of figure 22, opposite that of figure 23;
- figure 25 depicts the plug 22 in perspective view;

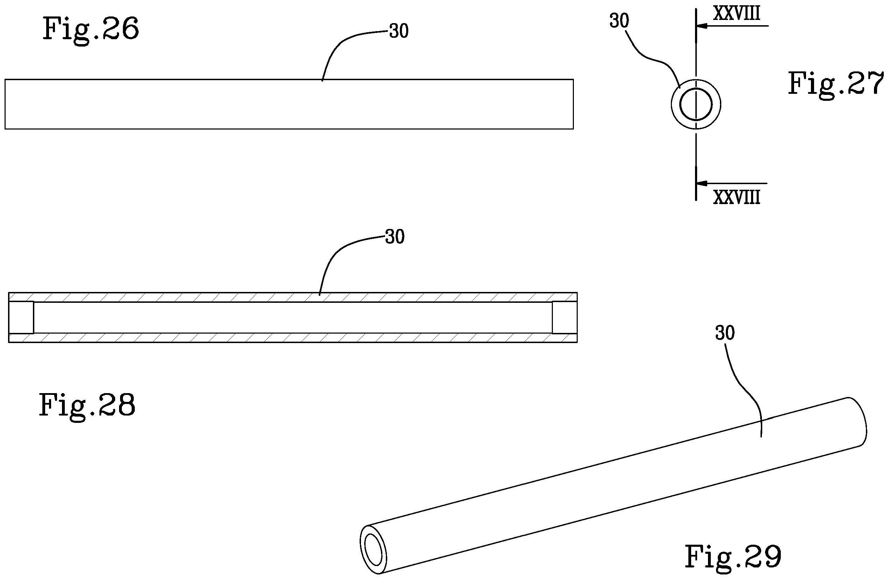

- figure 26 depicts the longitudinal centring element;
- figure 27 depicts an axial view of the longitudinal element of figure 26;
- figure 28 depicts a section along the line XXVIII-XXVIII of figure 27;
- figure 29 depicts a perspective view of the element of figure 26;

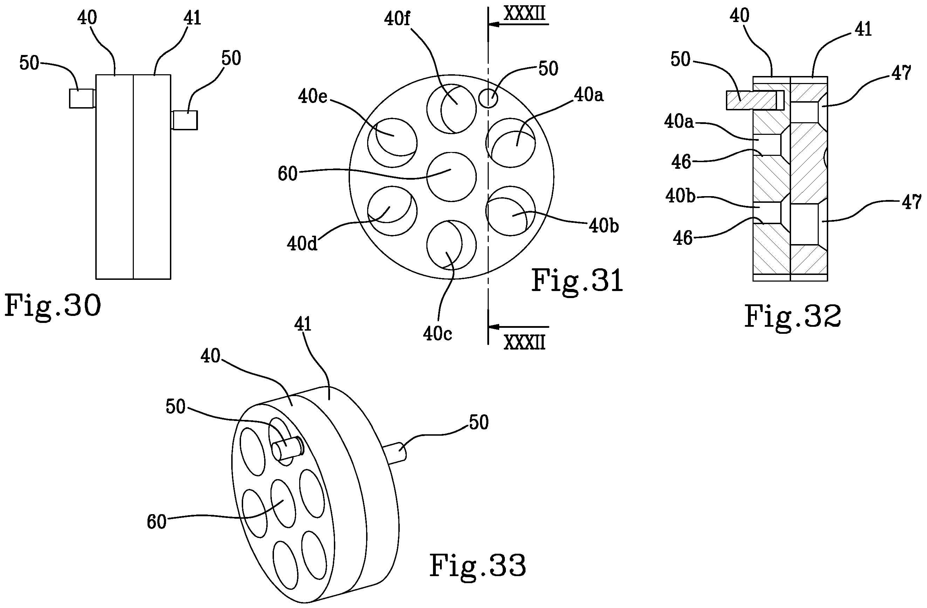

- figure 30 depicts a side view of a set of two discs;
- figure 31 depicts the two discs of figure 30 in axial view;
- figure 32 depicts a section along the line XXXII-XXXII of figure 31;
- figure 33 depicts a perspective view of the two discs of figure 30;

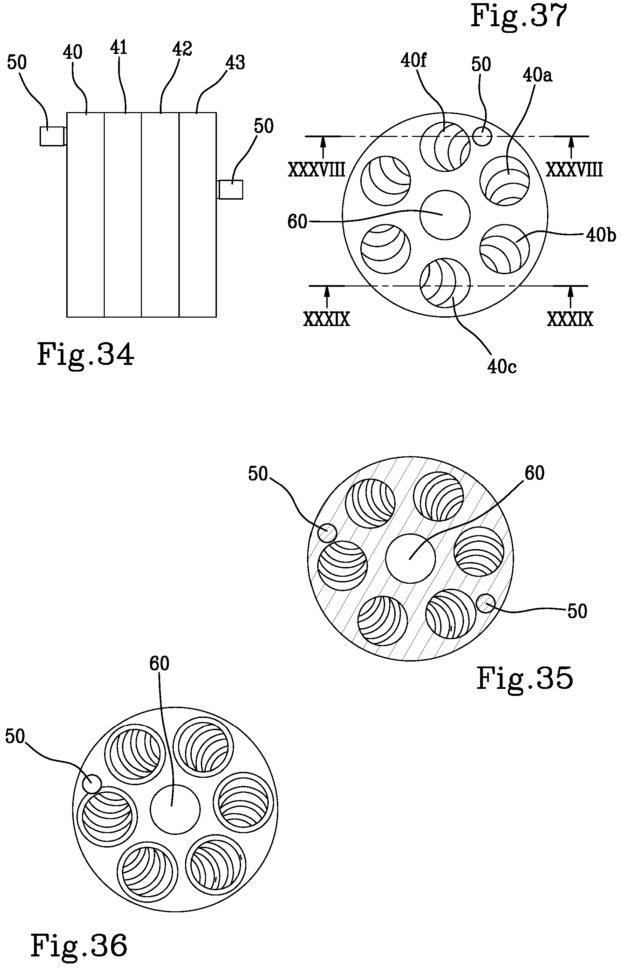

- figure 34 depicts a side view of a set of four discs;
- figure 35 depicts a section along the line XXXV-XXXV of figure 34;
- figure 36 depicts a first axial view of the four discs of figure 34;
- figure 37 depicts a second axial view of the four discs of figure 34, opposite that of figure 36;

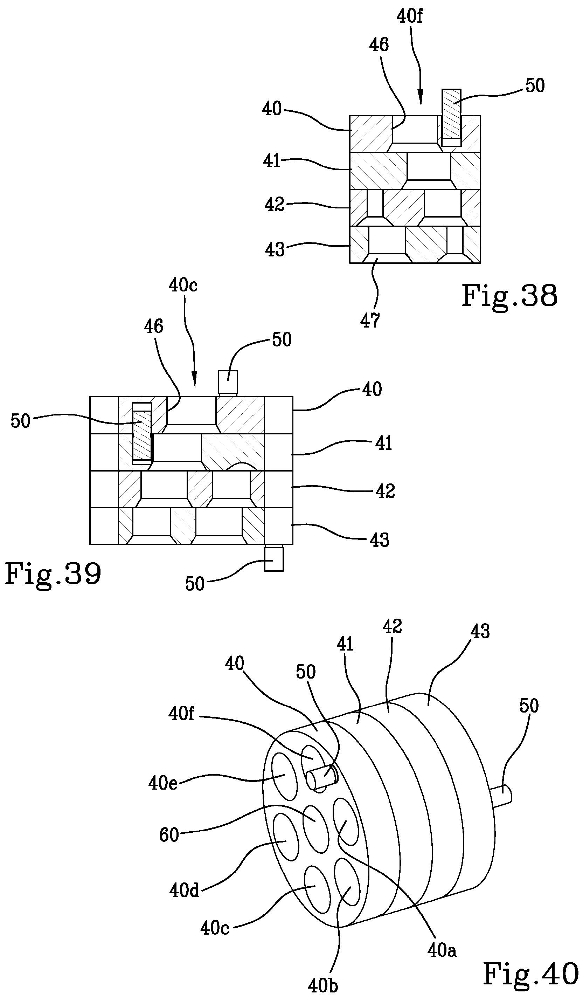

- figure 38 depicts a section along the line XXXVIII- XXXVIII of figure 37;
- figure 39 depicts a section along the line XXXIX-XXXIX of figure 37;
- figure 40 depicts a perspective view of the four discs of figure 34;
- figure 41 depicts a side view of a central portion of the device of figure 1 comprising a plurality of discs of figures 30 to 39;
- figure 42 depicts a first axial view of the central body of figure 41;
- figure 43 depicts a section along the line XLIII-XLIII of figure 42;
- figure 44 depicts a second axial view of the central body of figure 41, opposite that of figure 42;

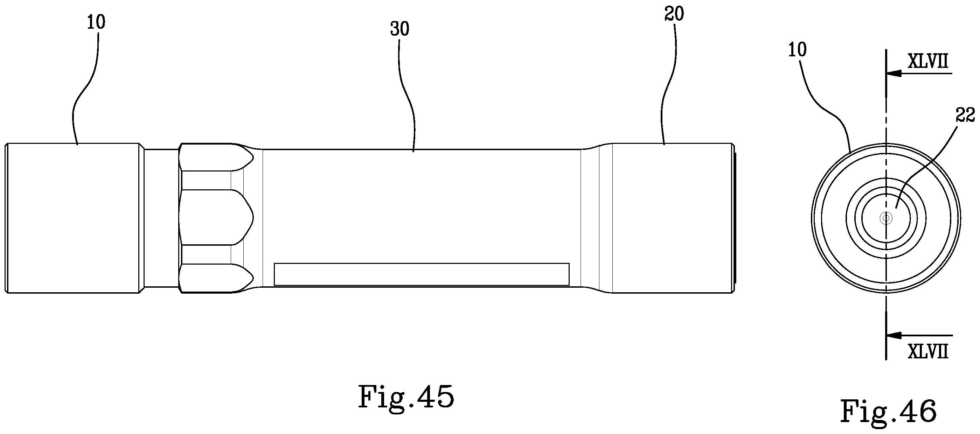

- figure 45 depicts a side view of the device for water treatment according to the present invention;
- figure 46 depicts an axial view of the device of figure 45;
- figure 47 depicts a section along the line XLVII-XLVII of figure 46;

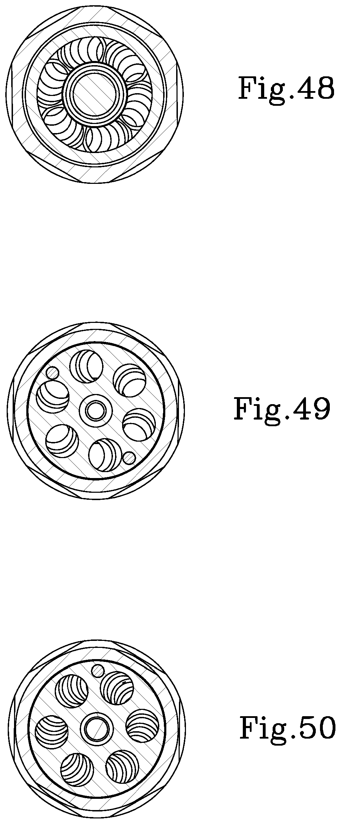

- figure 48 depicts a section along the line XLVIII-XLVIII of figure 47;
- figure 49 depicts a section along the line XLIX-XLIX of figure 47;
- figure 50 depicts a section along the line L-L of figure 47;
- figure 51 depicts a packet of central discs in axial view with a "square" shape;
- figure 52 depicts a packet of central discs in axial view with a "hexagonal" shape;
- figure 53 depicts a packet of central discs in axial view with an "eight" shape;
- figure 54 depicts a packet of central discs in axial view with a "triangle" shape;
- figure 55 depicts a first disc in axial view, at the inlet;
- figure 56 depicts a section along the line LVI-LVI of figure 55;
- figure 57 depicts the first disc of figure 55 in axial view, at the outlet;
- figure 58 depicts a second disc in axial view, at the inlet;
- figure 59 depicts a section along the line LIX-LIX of figure 58;
- figure 60 depicts the second disc of figure 58 in axial view, at the outlet;
- figure 61 depicts a section of a packet consisting of the first disc of figure 55 to the second disc of figure 58;
- figure 62 depicts a side view of a central portion of the device of figure 1 comprising a plurality of pairs of discs of figures 55 to 60;
- figure 63 depicts a section along the line LXIII-LXIII of figure 62;
- figure 64 depicts a section along the line LXV-LXV of figure 45

### Detailed description of preferred embodiments of the invention

The device for water treatment or for the treatment of other liquids according to the present invention is indicated in the appended figures with reference numeral 1.

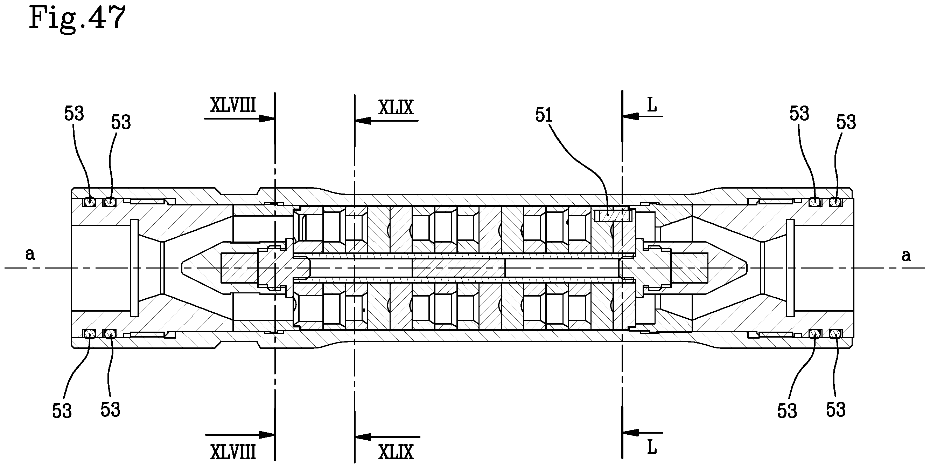

Figure 47 shows a longitudinal section of the device 1, which is a conduit which externally has an outer tubular shape 10, 20, 30 which is substantially elongated along a longitudinal axis *a-*a.

The device 1 comprises an inlet conduit 10 for a water flow, intended to be installed after the water meter of a house or any civil or industrial structure described above.

In the outer part of the sleeve 10, 20, 30 there is a threaded hole which allows housing a cable having the function of grounding so as to interrupt possible dispersed or stray electric currents. The attachment of the water inlet 12 has a special seat for the connection with the general water pipe.

The element 12 is preferably made of polyethylene for food use and has the function of interrupting the passage of any dispersed or stray electric currents present in the water system to which the device is connected.

The device 1 comprises downstream of the water flow an outlet conduit 20 of the water flow, in fluid communication with the inlet conduit 10, also preferably made of polyethylene for food use.

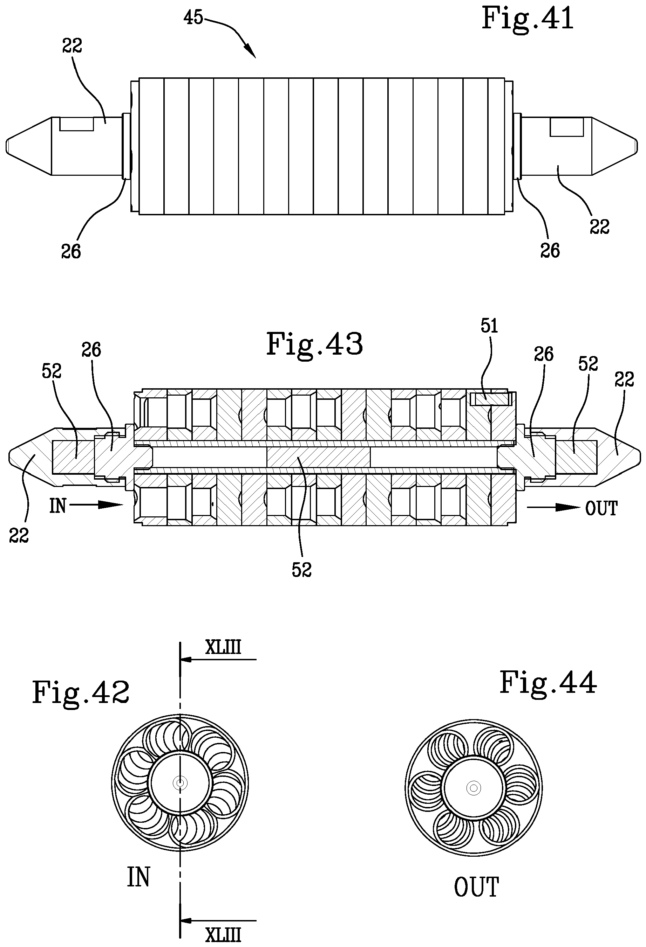

The device 1 further comprises a central body 45, as illustrated in figure 43, contained in a central zone inside the outer tubular body 10, 20, 30 and in contact with the water flow.

The central body 45 consists of a plurality of discs 40, 41, 42, 43, 44 aligned longitudinally along the axial direction (axis *a-a*) of the water flow, each of which has one or more holes 40a, 40b, 40c, 40d, 40e, 40f arranged in a circular crown.

Each central disc 40, 41, 42, 43, 44 is rotated at a predetermined angle with respect to the preceding central disc 40, 41, 42, 43, 44, so as to allow the flowing liquid to impact each disc passage 40, 41, 42, 43, 44 generating a mechanical effect that will result in a hydrodynamic cavitation process.

In particular, in the water flow passing through the device, ultrasonic waves are induced, which contribute to improving the properties of the water.

Since each disc is rotated by a predetermined angle, between the holes 40a, 40b, 40c, 40d, 40e, 40f adjacent for the passage of water from adjacent discs, a winding path is generated for the water flow passing through the device 1 capable of generating the hydrodynamic cavitation effect.

Preferably, the assembly of the discs 40a, 40b, 40c, 40d, 40e, 40f is achieved by means of pins 50, with rotation between one disc and the next disc by an angle varying from 1 to 350 degrees.

The central discs 40a, 40b, 40c, 40d, 40e, 40f may be in variable numbers, as a function of the results to be obtained, although for ease of exposure in the appended figures packets formed by two or four or fifteen adjacent central discs are shown.

The discs may have cylindrical holes or any other geometric shape that gives rise to a possible delta in terms of fluid pressure and flow rate.

The central portion 45 of central discs also comprises an inlet disc, at the entering water flow, and an outlet disc, at the exiting flow.

The number, shape and size of the holes 40a, 40b, 40c, 40d, 40e, 40f of the central discs 40, 41, 42, 43, 44 are not necessarily the same as those present in the inlet disc, while they are the same as those of the outlet disc.

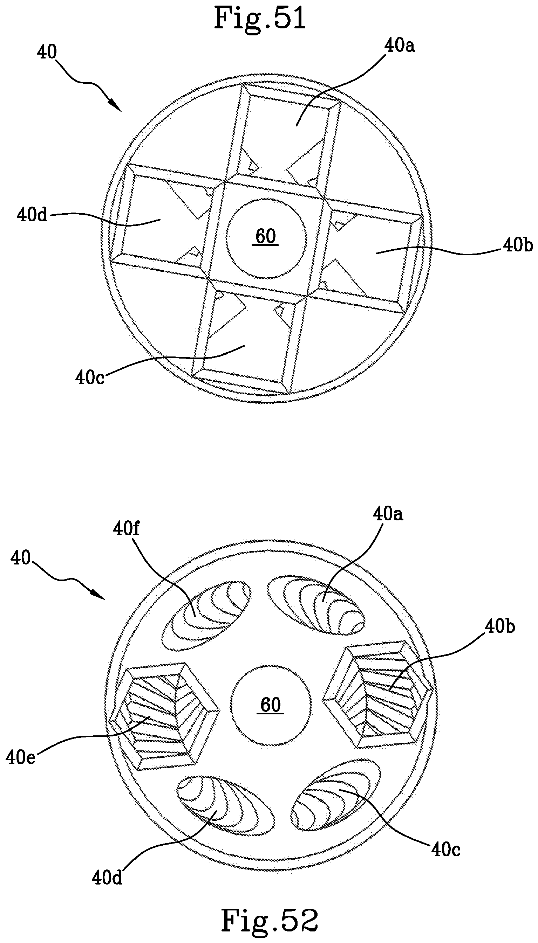

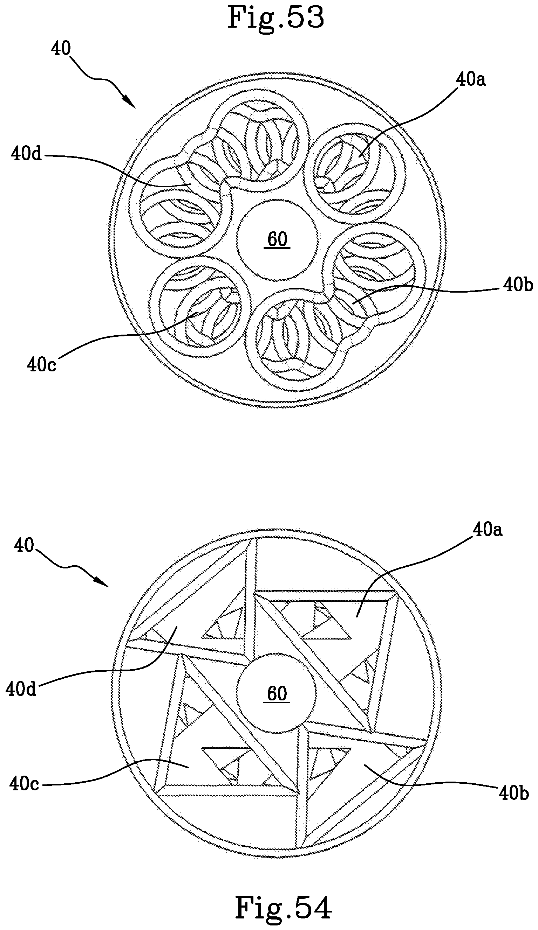

Figures 51 to 54 illustrate, by way of non-limiting example, four other different types of holes 40a, 40b, 40c, 40d, 40e, 40f of the central discs 40, 41, 42, 43, 44, respectively, holes having a "square" shape, a "hexagonal" shape, an "eight" shape and a "triangle" shape.

The holes 40a, 40b, 40c, 40d, 40e, 40f have on the water outlet side a divergence or countersink 47 having a variable angle as a function of the intended use of the device 1, with the function of allowing a sudden variation in fluid pressure and flow rate, creating micro-cavitations.

In the assembly sequence of the central discs 40, 41, 42, 43, 44, each of them is rotated with respect to the preceding one according to a determined angle. This allows the flowing liquid to impact each disc passage, thus generating a mechanical effect that will give rise to the hydrodynamic cavitation process.

The inlet disc has one or more holes arranged in a circular crown partially at the holes 40a, 40b, 40c, 40d, 40e, 40f of the central discs 40, 41, 42, 43, 44.

Each hole of the inlet disc has a bevel 46 at the water inlet (adapted to facilitate the water flow) and, at the opposite end of the water outlet, a countersink 47 (adapted to create a delta in terms of pressure and flow rate).

Preferably, the inlet disc comprises a number of holes equal to the number of holes 40a, 40b, 40c, 40d, 40e, 40f of the central discs 40, 41, 42, 43, 44 and is also rotated by a predetermined angle with respect to the first of the central discs.

Preferably, each hole 40a, 40b, 40c, 40d, 40e, 40f of each central disc 40, 41, 42, 43, 44 has a cylindrical shape.

Each central disc 40, 41, 42, 43, 44 comprises two holes or seats present on opposite surfaces of each disc 40, 41, 42, 43, 44, each hole being configured to house a locking element 50.

Each central disc 40, 41, 42, 43, 44 is constrained on the adjacent central disc 40, 41, 42, 43, 44 through an axial pin 50. It is thereby avoided that the discs can rotate around the longitudinal axis a-a.

The axial pin 50 further allows to maintain the discs 40, 41, 42, 43, 44 firmly locked on top of each other, preserving the mounting sequence from possible positioning errors or involuntary rotations.

Furthermore, the presence of each hole or seat for the locking element 50 of each central disc 40, 41, 42, 43, 44 determines said determined partial rotation angle of a disc 40, 41, 42, 43, 44 with respect to the previous disc 40, 41, 42, 43, 44 such that between the adjacent holes 40a, 40b, 40c, 40d, 40e, 40f for the passage of water from adjacent discs, a winding path for the water flow passing through the device is generated.

Each central disc 40, 41, 42, 43, 44, inlet disc and outlet disc comprise a through central axial hole 60 configured to make an axial joining element 30 pass through. Thereby, the discs are directed with each other, and kept centred along the central axis a-a of the outer casing 10, 20, 30.

Preferably, the axial joining element 30 has a cylindrical shape.

The axial joining element 30 is preferably hollow and is configured to house inside one or more magnets 52, as a function of the intended use of the device, whose function is to create a magnetic field adapted to modify the structure of the limestone present in the liquid. Preferably each central disc 40, 41, 42, 43, 44 comprises four to six peripheral holes 40a, 40b, 40c, 40d, 40e, 40f.

The device 1 comprises a converging-diverging element 11 downstream and/or upstream of said central body 45 and crossed by the water flow.

The connecting element 60 is inserted through the central hole 60 of each inlet, central and outlet disc.

Subsequently, the ends of the central element 30 are closed with a locking plug 26, which contributes to keeping the discs packed and allows a cap 22 to be assembled on the opposite axial side.

At the opposite axial ends of the central body 45, a pair of caps 22 is constrained, each having a seat 24 configured to be constrained to one of the two axial ends of the central body 45 and an outer surface in fluid contact with the water entering and/or exiting said central body 45.

Preferably, the outer surface in contact with the water flow of each cap has a shape adapted to direct the water flow on the circular crown of the discs so as to facilitate the entry of water inside the holes of the discs. For example, it may have a wedge-shaped or triangular shape. In other words, each closing cap 22 essentially has two technical effects: the first is to create a delta of pressure and flow rate of the water flow capable of conferring greater effectiveness to the instrument, the other is to direct the liquid towards the peripheral holes of the discs. Preferably, the cap 22 comprises an inner seat configured to house a magnet 23. Furthermore, the cap 22 comprises a threaded seat 24 for locking on the central body 45, in particular, on an axial protrusion of the closing element 26.

The closing element 26 comprises, on the axial side opposite to that constrained with the cap 22, an axial protrusion that is constrainable inside the axial joining element 30.

Preferably, the central discs 40, 41, 42, 43, 44, the inlet disc, the outlet disc, the cap 22 and the disc stopping pin 50 are made of one or more of the following materials:
- brass with low lead content;
- titanium;
- stainless steel 316L;
- Aluminium;
- plastic materials.

The discs 40, 41, 42, 43, 44 of the central body 45, the inlet disc and the outlet disc undergo a galvanic silver plating surface treatment.

In both the inlet and outlet zones of the water flow, there is an inlet spacer and an outlet spacer whose function is to orient the central body 45 and lock it on the outer sleeve 10, 20, 30 by means of dimensional interference.

The spacer elements can be made of Titanium or Stainless Steel 316L.

At the engagement points of the device 1 to the water system, both at the inlet and the outlet, rubber O-ring seals 53 are inserted, so as to
prevent fluid leakage. Said seals 53 can be inserted in a variable number from 2 to 4 elements, positioned both at the inlet and outlet in specific housing seats created in the inlet and outlet attachment.

Each of the elements described above can be made in different materials, evaluable as a function of the intended use of the instrument and the purposes pursued with the use thereof. The succession of the axially arranged elements of the device 1 described so far, from the entrance to the exit of the water, schematically define four different zones: threaded inlet (zone 1), inlet cone (zone 2), hydrodynamic cavitation zone (zone 3) and outlet cone (zone 4).

### Zone 1 - Threaded inlet

Entering the instrument, in the part immediately after the coupling thread to the water conduit outside the device 1, the liquid undergoes a variation in speed and pressure such as to obtain the optimal features for the subsequent entry into the hydrodynamic cavitation zone or "turbine".

In this zone, the seal against any leakage of liquid outside is ensured by the presence of rubber O-ring seals 53.

### Zone 2 - Inlet cone

The conicity of the part positioned in this zone allows a uniform distribution of the liquid in the "turbine" or hydrodynamic cavitation zone. The possible magnet 52 positionable therein allows a first structural modification process of the fluid.

### Zone 3 - cavitation zone

This zone represents the "heart" of the device 1 of the present invention, i.e., the section through which the passage of the liquid generates most of the water transformation processes listed in the preceding point: hydrodynamic cavitation, bacterial depletion, reduction of viscosity, reduction of water clusters, significant decrease in the encrusting effects of limestone, better mixing if different liquids or a liquid with powders enters.

### Zone 4 - Outlet cone

In the passage through this zone the liquid undergoes a bottleneck, creating the correct pressure needed to return the liquid fibres to the correct position, thus amplifying the work of the magnet 52, inserted inside the element 22, on the structure of the water molecules.

The assembly of the device 1 for water treatment involves the four sequential steps described below.

### First step: assembly of the central part 45.

The locking plug or pin 26 of the discs is placed, which helps to keep the discs packed, in a vice, tightened at the milling point outside the central packet 45, and the pipe or axial centring element 30 of the discs is screwed to the bottom to then loosen the tightening by one turn, so that a clearance of a few mm can be created between the two elements. The pipe 30 should preferably be positioned vertically.

The inlet disc 39 is then fitted on the pipe 30, the first locking and positioning pin 51 is inserted and the first disc 40 of the sequence of central discs to be packed is then positioned.

The second disc stopping pin 50 is then inserted, proceeding in succession for all the envisaged central discs.

With this assembly sequence, the positioning of the discs with a precise and predetermined angle is quickly and effectively obtained, creating a winding path for the liquid which flows inside the sequence of holes of the packed discs.

When the final or outlet disc is positioned, the sequence of discs is blocked by inserting a disc locking pin or plug 26. Once everything is sealed, the caps 22 are positioned, preferably containing the magnets 52. Optionally, the food-grade seals inserted therein allow the seal thereof, in addition to avoiding contact between liquid and magnet 52. The assembly is firmly secured through mechanical fixing, for example, by means of threading.

With this last passage, the central body 45 is completed.

### Second step

The inlet spacer 27 is keyed onto the outer sleeve 30, positioning it already in the correct final position.

The geometry of the spacer is such as to generate interference on the sleeve adapted to create a lock with the central body.

### Third step

The central body 45 is introduced inside the outer sleeve 30, pushing it until it abuts the inlet spacer 27. Subsequently, the outlet spacer is inserted with the help of a press, necessary for the high degree of interference present. This same interference has the function of keeping the central body 45 locked in the desired position.

### Fourth step

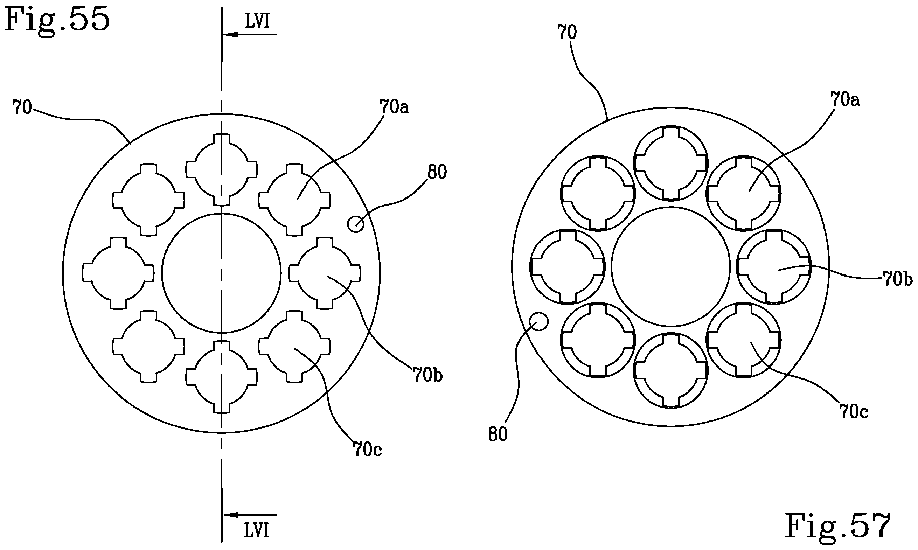

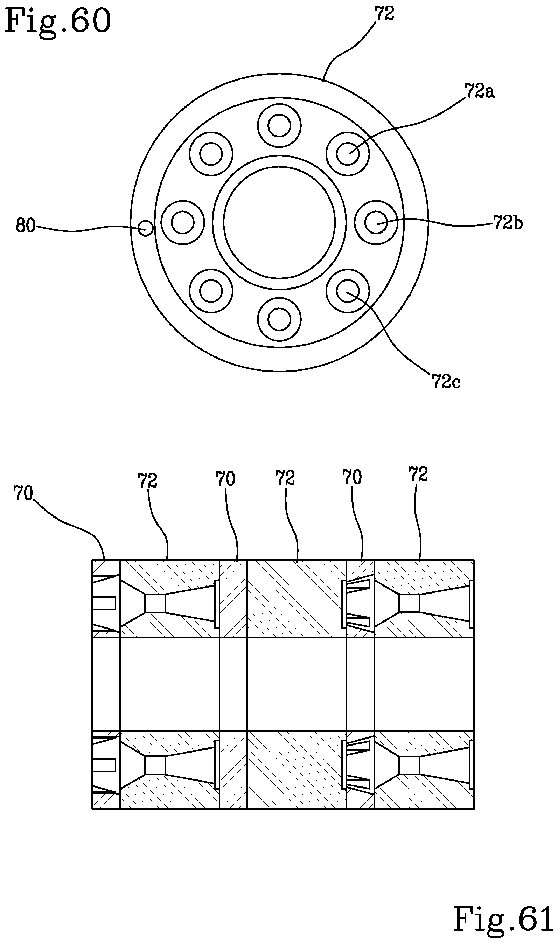

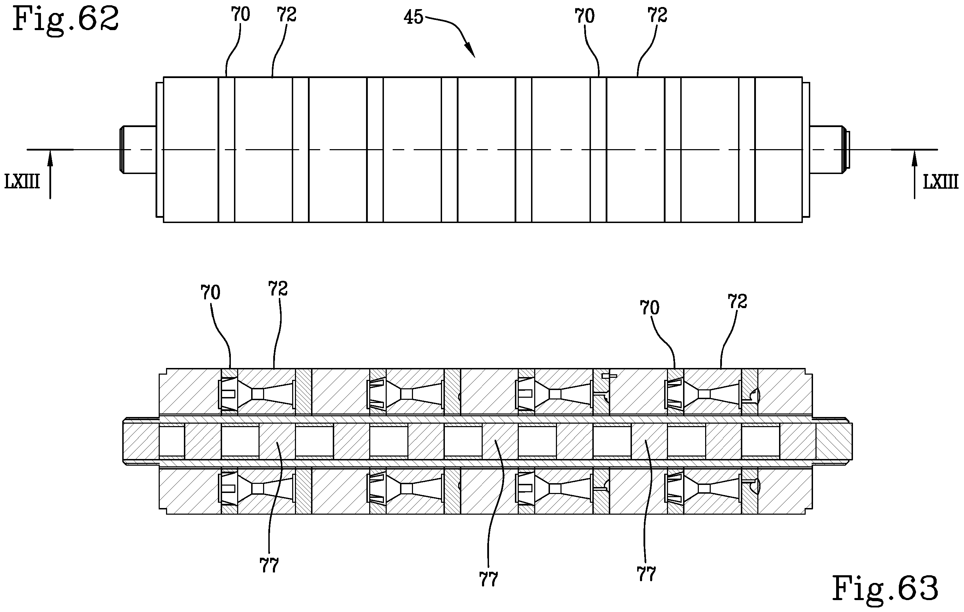

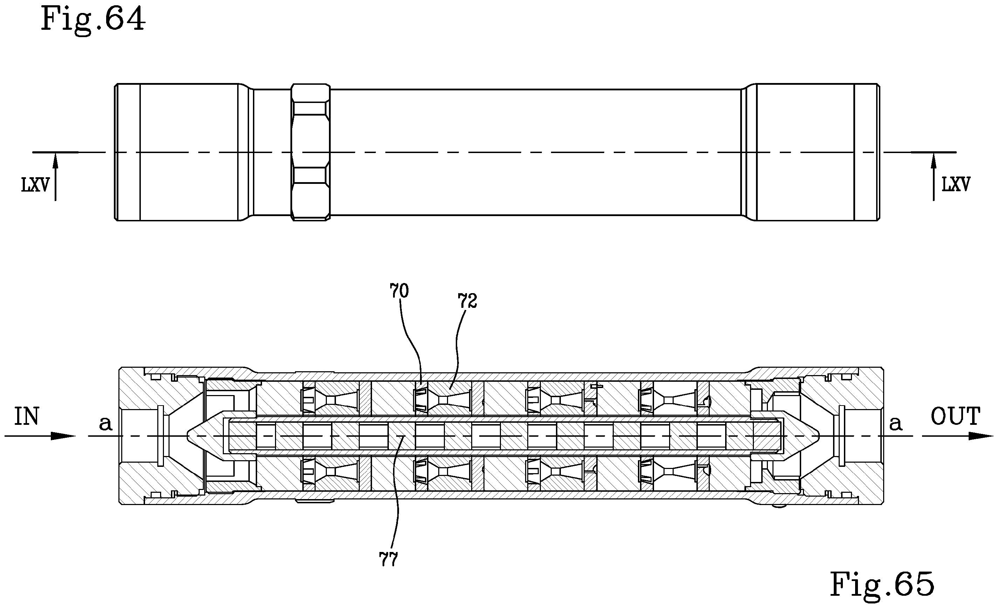

The assembly is completed with the insertion of the two inlet 10 and outlet 20 attachments functional to ensure a further locking of the central body. Lastly, O-ring seals 53 are inserted on these with the function of preventing accidental leakage of liquids in the operating step. In the second embodiment of the present invention, the central body 45 of the device 1 consists of one or more pairs of discs as illustrated in figures 55 to 65. All the other elements of the device 1 of the second embodiment illustrated below are identical to those described for the first embodiment of the present invention.

The inner part of the central body 45 of the second embodiment consists of a succession of pairs of discs 70, 72 packed together, each of which has a sequence of holes 70a, 70b, 70c, 72a, 72b, 72c of different shape, size and length between one disc and the other.

The number of pairs of discs 70, 72 is variable from a minimum of three pairs to a maximum to be defined according to the result to be obtained. Each single pair of discs 70, 72 consists of the packing two discs 70, 72.

Figure 55 depicts a view of the fluid entering through a first disc 70, in which the entering fluid passes through one or more holes 70a, 70b, 70c, present on the peripheral circular crown of a first disc 70. Each hole 70a, 70b, 70c has in section, from the entrance to the exit of the liquid flow, one or more bevels or toothings 71 which allow to create angles that increase the edges on which the inlet liquid "collides". Thereby, the first disc 70 allows to break down the surface tension on the liquid flow entering.

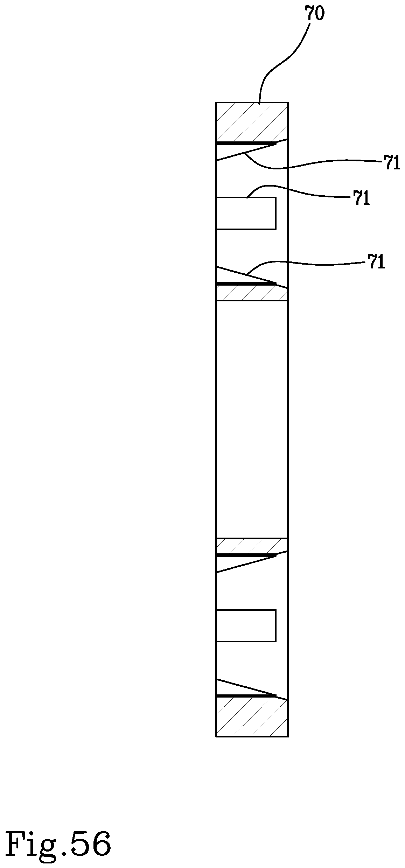

As illustrated in figure 56, each hole 70a, 70b, 70c is partially conical and diverging from the liquid entrance towards the exit.

The second disc 72 is directly coupled to the exit of the first disc 70, comprises an equal number of holes 72a, 72b, 72c aligned and at the holes 70a, 70b, 70c of the first disc 70, so as to allow the passage of the liquid flow.

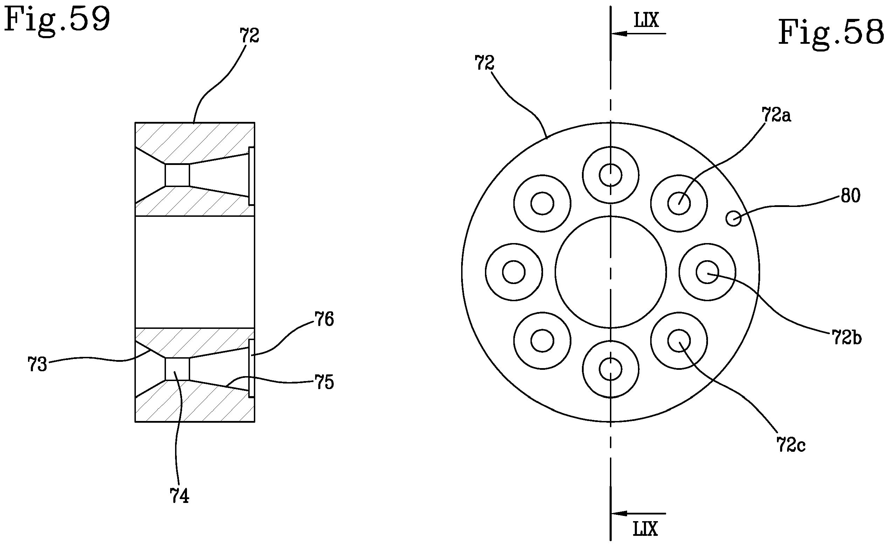

Each hole 72a, 72b, 72c has in section from the entrance to the exit of the liquid flow, as illustrated in figure 59, a first converging bevel 73, a cylindrical central part 74 and a second diverging bevel 75 (preferably having a greater length than that of the first bevel 73).

The first bevel 73 allows to facilitate the entrance of the liquid flow towards the smaller central narrowing 74. In the second bevel 75, from which the diameter of the central part 74 increases until the end of the second disc 72, the cavitation of the liquid flow occurs.

In other words, the interior of the second disc 72 has a plurality of holes therein, each of which forms a Venturi chamber capable of generating a cavitation.

Preferably, in the final part of the second disc 72 there is a front groove 76 to allow the exiting liquid to reunite, so as to create a turbulence. In other words, the front groove 76 embraces all the holes and has the function of creating a small tank which allows an increase in pressure and a turbulence adapted to mix the liquid and facilitate the supply of the liquid to the next packet of discs 70, 72.

This will serve to mix the liquid before it is pushed into the next packet of discs 70, 72, thus giving the liquid a mode for almost all of it to be processed, considering the fact that the passages are carried out on a very small diameter, so as to ensure the desired result. Preferably, the first disc 70 has a thickness less than that of the second disc 72, as illustrated in the appended figures.

The locking of the first disc 70 on the second disc 72 is ensured by a tubular element, threaded at the ends, which slides in the central part of the pair of discs 70, 72, along the longitudinal axis a of the device 1.

Furthermore, on each disc 70, 72 there is a hole 80 on the peripheral zone, which hole is capable of accommodating a pin for positioning the first disc 70 to the second disc 72. Preferably, magnets 77 may be present inside the longitudinal tubular element.

There are two conical caps for tightening on the two threaded ends.

When the liquid enters the pair of packed discs 70, 72, from the second packet of discs and following, we will find an undercut 71, so as to create a sort of blade to cut the liquid flow.

Preferably, in the inner surface of the holes 72a, 72b, 72c of the disc 72, a broaching may also be present to increase the edges and create a larger work surface. The broaching, placed on the circumferences whose sum will be equivalent to twice the area of the initial pipe, will have the function of preparing the liquid entering the many Venturi chambers of the second disc 72. The elements of the liquid will begin to separate, preparing the cavitation step which will then occur in the Venturi holes, favouring the implosion of the molecules. The break down which occurs at the first disc 70 will have the task of reducing the surface tension of the liquid. Strongly reducing the surface tension will greatly help amplify the cavitation effects which will develop in the next pair of discs 70, 72.

The second disc 72 has a series of Venturi chambers equal to the number of passages or holes 72a, 72b, 72c.

The cavitation inside the holes of the second disc 72 favours the formation and movement of bubbles inside a liquid when it is subjected to the action of positive and negative pressure waves at very high speed, generating ultrasound with an intense ultrasound field. During the negative pressure step, a multitude of bubbles are created inside the liquid. During the second step of ultrasonic compression, the enormous pressure exerted on the bubbles decompresses them until they implode, i.e., collapse on themselves. This implosion of the molecule has the function of creating the elimination of bacterial load, in addition to the transformation of the calcium molecule into aragonite, making the liquid much less encrusting. The disc 72 has multiple passages, with a minimum of three (elements 73, 74 and 75 of figure 59) and a maximum to be defined, to find a compromise between desired effect and loss of flow.

The positioning of the holes between a pair of discs 70, 72 and the subsequent one does not follow, in this second embodiment, a spiral trend. In particular, the outlet holes 72a, 72b, 72c will be perfectly offset with the inlet holes 70a, 70b, 70c equal in size to half the diameter of the hole.

The holes of the first packet or pair of discs 70, 72 will therefore be in line with those of the third packet of discs 70, 72, of the fifth, of the seventh, etc., while the holes of the second will be aligned with those of the fourth, of the sixth, of the eighth, and so on depending on how many pairs of discs must be inserted in the central body 45. The goal to be achieved will determine the number of disc pairs needed. Certainly as the obstructions generated by the cavitations increase, there will be an increase in flow rate losses, for this reason, preferably with nine pairs of discs 70, 72, extraordinary certified results are achieved. However, nothing prevents increasing the number according to needs.

The present invention achieves the following technical effects:
Bacterial abatement without the use of chemicals and without the use of electricity or heat.

### Decreased limestone aggressiveness.

It promotes the mixing of different liquids or liquids with any powders contained therein.

In the case of agricultural use, it promotes improved oxygenation of water, decreasing the viscosity thereof, in addition to obtaining better absorption of the same by living organisms, animals and plants, which benefit therefrom.

Reduction of the need to use cleaning and anti-limescale products in civil and industrial washing applications.

The galvanic silver plating treatment of the elements of the device 1 allows the advantage of a reduction of the bacteria present in the water, or in any other liquid.

Preferably, the device 1 can be made entirely of Titanium, a material particularly suited for applications in the medical field.

The insertion of magnets 52, hermetically sealed inside the central body 14 and/or the caps 22, allows to amplify the effects of the mechanical process generated.

In an embodiment of the invention, the central discs are made using different materials, in order to create, through the passage of the fluid, electrostatic energy which can be exploited for possible uses in alternative applications.

Making the engagement connection in polyethylene allows to reduce possible dispersions of stray electrostatic currents present in the system.

The device for water treatment illustrated allows a reduction of surface tension which in turn allows a greater surface exchange between water and any hydrophilic substances (e.g., hydrophilic portions of the molecules which form soaps and detergents) and greater solvent power and wettability. Therefore, the water passed through the device of the invention shows a better cleaning capacity and allows to reduce the use of detergents and surfactants.

This advantage is particularly important for domestic use.

Furthermore, the above mechanical disturbances hinder the formation of limestone residues from calcium salts and the precipitation and deposit thereof on pipes and other plants. The applicant has found that the natural tendency of calcium molecules to aggregate into the crystalline form of calcite (responsible for limestone formation) is hindered by the passage through the device of the invention.

It is clear that the specific features are described in relation to different embodiments of the invention with an exemplary and non-limiting intent.

Obviously a person skilled in the art can make further modifications and variants to the present invention, in order to satisfy contingent and specific needs. For example, the technical features described in relation to an embodiment of the invention can be extrapolated therefrom and applied to other embodiments of the invention.

## Claims

1. A device (1) for water treatment, comprising:
an outer tubular body (10, 20, 30) with an extension along a longitudinal axis a;
an inlet conduit (10) for a water flow;
an outlet conduit (20) of the water flow in fluid communication with said inlet conduit (10); said inlet conduit (10) and said outlet conduit (20) being aligned along said longitudinal axis a,
at opposite ends of said outer tubular body (19, 20, 30);
a central body (45) contained in a central zone inside said outer tubular body (10, 20, 30) and in contact with said water flow, the central body (45) comprising a plurality of discs (40, 41, 42, 43, 44) packed and centred longitudinally along said longitudinal axis a of said outer tubular body (10, 20, 30), each of which has a plurality of holes (40a, 40b, 40c, 40d, 40e, 40f) arranged in a circular crown, each central disc (40, 41, 42, 43, 44) being rotated by a predetermined angle with respect to the preceding central disc (40, 41, 42, 43, 44);
**characterized in that** each central disc (40, 41, 42, 43, 44) comprises two holes present on opposite surfaces of each central disc (40, 41, 42, 43, 44) configured to house a locking element (50);
wherein each hole for the locking element (50) of each central disc (40, 41, 42, 43, 44) determines said determined partial rotation angle of a disc (40, 41, 42, 43, 44) with respect to the preceding central disc (40, 41, 42, 43, 44);
each central disc (40, 41, 42, 43, 44) being constrained on the adjacent central disc (40, 41, 42, 43, 44) through an axial pin (50).

2. The device (1) according to claim 1, wherein each hole (40a, 40b, 40c, 40d, 40e, 40f) of the central discs (40, 41, 42, 43, 44) has a countersink (47) in the end of the water outlet.

3. The device (1) according to claim 1 or 2, wherein each central disc (40, 41, 42, 43, 44) comprises a through central hole (60) configured to make an axial joining element (30) pass through.

4. The device (1) according to claim 3, wherein said axial joining element (30) is hollow.

5. The device (1) according to claim 3 or 4, wherein said axial joining element (30) is configured to house one or more magnets (52) therein.

6. The device (1) according to one or more of the preceding claims, comprising a converging-diverging element (11) downstream and/or upstream of said central body (45) and crossed by the water flow.

7. The device (1) according to one or more of the preceding claims, comprising a cap (22) having a seat (24) configured to be constrained to one of the two axial ends of said central body (45) and an outer surface in fluid contact with the water entering and/or exiting said central body (45).

8. The device (1) according to claim 7, wherein said cap (22) comprises an inner seat configured to house a magnet (23).

9. The device (1) according to claim 7 or 8, wherein the cap (22) comprises a thread for locking on the central body (45).

10. The device (1) according to on or more of the previous claims 3 or 4-10 when depending on claim 3, comprising a closing element (26) having an axial protrusion that is constrainable inside the axial joining element (30).

11. The device (1) according to claim 10, comprising a locking element locking to the seat (24) of the cap (22).

12. The device (1) according to one or more of the preceding claims, wherein the central discs (40, 41, 42, 43, 44) of the central body (45) and the inlet disc undergo a galvanic silver plating surface treatment.

13. A device (1) for water treatment, comprising:
an outer tubular body (10, 20, 30) with an extension along a longitudinal axis a;
an inlet conduit (10) for a water flow;
an outlet conduit (20) of the water flow in fluid communication with said inlet conduit (10); said inlet conduit (10) and said outlet conduit (20) being aligned along said longitudinal axis a, at opposite ends of said outer tubular body (19, 20, 30);
a central body (45) contained in a central zone inside said outer tubular body (10, 20, 30) and in contact with said water flow, the central body (45) comprising a plurality of pairs of discs (70, 72) packed and centred longitudinally along said longitudinal axis a of said outer tubular body (10, 20, 30),
each pair of discs (70, 72) comprises a first disc (70) and a second disc (72),
the first disc (70) has a plurality of holes (70a, 70b, 70c) for the passage of water,
the second disc (72) has a plurality of holes (72a, 72b, 72c) in fluid connection with the holes (70a, 70b, 70c) of the first disc (70), wherein each hole (70a, 70b, 70c) of the first disc (70) comprises a plurality of edges (71) configured to break down the surface tension of the entering water and each hole (72a, 72b, 72c) of the second disc (72) comprises a Venturi chamber;
wherein each hole (70a, 70b, 70c) of the first disc (70) is partially conical and diverging from the liquid inlet towards the outlet;
wherein each hole (72a, 72b, 72c) of the second disc (72) has in the section from the inlet towards the outlet of the liquid flow, a first converging bevel (73), a cylindrical central part (74) and a second diverging bevel (75);
**characterized by the fact** that each disc (70, 72) comprises a hole (80) on the peripheral zone, capable of
accommodating a pin for positioning the first disc (70) to the second disc (72);

14. The device (1) according to claim 13, wherein the holes of the pairs of discs (70, 72) in an even position present inside the central body (45) will be aligned with each other, while the holes of the pairs of discs (70, 72) in an odd position will be aligned with each other.

15. The device (1) according to claim 13 or 14, wherein there are at least three pairs of discs (70, 72) inside the central body (45).

## Patentansprüche

1. Vorrichtung (1) zur Flüssigkeitsbehandlung, die Folgendes umfasst:
einen äußeren rohrförmigen Körper (10, 20, 30) mit einer Ausdehnung entlang einer Längsachse *a*;
eine Einlassleitung (10) für einen Wasserfluss;
eine Auslassleitung (20) des Wasserflusses in Fluidverbindung mit der genannten Einlassleitung (10);
wobei die genannte Einlassleitung (10) und die genannte Auslassleitung (20) entlang der genannten Längsachse a,
an gegenüberliegenden Enden des genannten äußeren rohrförmigen Körpers (19, 20, 30), ausgerichtet sind;
einen zentralen Körper (45), der in einem zentralen Bereich im Inneren des genannten äußeren rohrförmigen Körpers (10, 20, 30) enthalten ist und mit dem genannten Wasserfluss in Kontakt steht, wobei der zentrale Körper (45) eine Vielzahl von Scheiben (40, 41, 42, 43, 44) umfasst, die in Längsrichtung entlang der genannten Längsachse a des genannten äußeren rohrförmigen Körpers (10, 20, 30) komprimiert und zentriert sind, von denen jede eine Vielzahl von Öffnungen (40a, 40b, 40c, 40d, 40e, 40f) aufweist, die in einer kreisförmigen Krone angeordnet sind, wobei jede zentrale Scheibe (40, 41, 42, 43, 44) im Verhältnis zu der vorhergehenden zentralen Scheibe (40, 41, 42, 43, 44) um einen vorgegebenen Winkel gedreht ist;
**dadurch gekennzeichnet, dass** jede zentrale Scheibe (40, 41, 42, 43, 44) zwei Öffnungen umfasst, die sich auf gegenüberliegenden Oberflächen jeder zentralen Scheibe (40, 41, 42, 43, 44) befinden und darauf ausgelegt sind, ein Verriegelungselement (50) unterzubringen;
wobei jede Öffnung für das Verriegelungselement (50) jeder zentralen Scheibe (40, 41, 42, 43, 44) den genannten festgelegten Teildrehwinkel einer Scheibe (40, 41, 42, 43, 44) im Verhältnis zu der vorhergehenden zentralen Scheibe (40, 41, 42, 43, 44) bestimmt;
wobei jede zentrale Scheibe (40, 41, 42, 43, 44) über einen axialen Stift (50) an der angrenzenden zentralen Scheibe (40, 41, 42, 43, 44) gehalten wird.

2. Vorrichtung (1) nach Anspruch 1, wobei jede Öffnung (40a, 40b, 40c, 40d, 40e, 40f) der zentralen Scheiben (40, 41, 42, 43, 44) eine Ansenkung (47) im Ende des Wasserauslasses aufweist.

3. Vorrichtung (1) nach Anspruch 1 oder 2, wobei jede zentrale Scheibe (40, 41, 42, 43, 44) eine durchgehende zentrale Öffnung (60) aufweist, die darauf ausgelegt ist, ein axiales Verbindungselement (30) hindurchzulassen.

4. Vorrichtung (1) nach Anspruch 3, wobei das genannte axiale Verbindungselement (30) hohl ist.

5. Vorrichtung (1) nach Anspruch 3 oder 4, wobei das genannte axiale Verbindungselement (30) darauf ausgelegt ist, einen oder mehrere Magnete (52) unterzubringen.

6. Vorrichtung (1) nach einem oder mehreren der vorangegangenen Ansprüche, die ein dem genannten zentralen Körper (45) nachgelagertes und/oder vorgelagertes konvergierendes/divergierendes Element (11) umfasst, das von dem Wasserfluss überquert wird.

7. Vorrichtung (1) nach einem oder mehreren der vorangegangenen Ansprüche, das eine Kappe (22) mit einem Sitz (24), der darauf ausgelegt ist, an einem der beiden axialen Enden des genannten zentralen Körpers (45) gehalten zu werden, und eine Außenfläche in Fluidkontakt mit dem in den genannten zentralen Körper (45) eintretenden und/oder aus ihm austretenden Wasser umfasst.

8. Vorrichtung (1) nach Anspruch 7, wobei die genannte Kappe (22) einen inneren Sitz aufweist, der darauf ausgelegt ist, einen Magneten (23) aufzunehmen.

9. Vorrichtung (1) nach Anspruch 7 oder 8, wobei die Kappe (22) ein Gewinde zum Verriegeln auf dem zentralen Körper (45) umfasst.

10. Vorrichtung (1) nach einem oder mehreren der vorangegangenen Ansprüche 3 oder 4 bis 10, wenn von Anspruch 3 abhängig,
umfassend ein Verschlusselement (26), das einen axialen Vorsprung aufweist, der im Inneren des axialen Verbindungselements (30) einspannbar ist.

11. Vorrichtung (1) nach Anspruch 10,
umfassend ein Verriegelungselement, das in den Sitz (24) der Kappe (22) einrastet.

12. Vorrichtung (1) nach einem oder mehreren der vorangegangenen Ansprüche, wobei die zentralen Scheiben (40, 41, 42, 43, 44) des zentralen Körpers (45) und die Einlassscheibe einer Oberflächenbehandlung durch galvanische Versilberung unterzogen werden.

13. Vorrichtung (1) zur Flüssigkeitsbehandlung, die Folgendes umfasst:
einen äußeren rohrförmigen Körper (10, 20, 30) mit einer Ausdehnung entlang einer Längsachse *a*;
eine Einlassleitung (10) für einen Wasserfluss;
eine Auslassleitung (20) des Wasserflusses in Fluidverbindung mit der genannten Einlassleitung (10);
wobei die genannte Einlassleitung (10) und die genannte Auslassleitung (20) entlang der genannten Längsachse a an gegenüberliegenden Enden des genannten äußeren rohrförmigen Körpers (19, 20, 30) ausgerichtet sind;
einen zentralen Körper (45), der in einem zentralen Bereich im Inneren des genannten äußeren rohrförmigen Körpers (10, 20, 30) enthalten ist und mit dem genannten Wasserfluss in Kontakt steht, wobei der zentrale Körper (45) eine Vielzahl von Scheibenpaaren (70, 72) umfasst, die in Längsrichtung entlang der genannten Längsachse a des genannten äußeren rohrförmigen Körpers (10, 20, 30) komprimiert und zentriert sind,
wobei jedes Scheibenpaar (70, 72) eine erste Scheibe (70) und eine zweite Scheibe (72) umfasst,
wobei die erste Scheibe (70) eine Vielzahl von Öffnungen (70a, 70b, 70c) für den Durchfluss von Wasser aufweist,
wobei die zweite Scheibe (72) eine Vielzahl von Öffnungen (72a, 72b, 72c) in Fluidverbindung mit den Öffnungen (70a, 70b, 70c) der ersten Scheibe (70) aufweist, wobei jede Öffnung (70a, 70b, 70c) der ersten Scheibe (70) eine Vielzahl von Kanten (71) umfasst, die darauf ausgelegt sind, die Oberflächenspannung des eintretenden Wassers zu durchbrechen, und jede Öffnung (72a, 72b, 72c) der zweiten Scheibe (72) eine Venturi-Kammer umfasst;
wobei jede Öffnung (70a, 70b, 70c) der ersten Scheibe (70) teilweise konisch ist und von dem Flüssigkeitseinlass in Richtung Auslass divergiert;
wobei jede Öffnung (72a, 72b, 72c) der zweiten Scheibe (72) in dem Abschnitt vom Einlass zum Auslass des Flüssigkeitsstroms eine erste konvergierende Abschrägung (73), einen zylindrischen Mittelteil (74) und eine zweite divergierende Abschrägung (75) aufweist;
**dadurch gekennzeichnet, dass** jede Scheibe (70, 72) eine Öffnung (80) am Randbereich aufweist, die geeignet ist, einen Stift zur Positionierung der ersten Scheibe (70) an der zweiten Scheibe (72) unterzubringen;

14. Vorrichtung (1) nach Anspruch 13, wobei die Öffnungen der Scheibenpaare (70, 72) in einer geraden Position im Inneren des zentralen Körpers (45) miteinander ausgerichtet werden, während die Öffnungen der Scheibenpaare (70, 72) in einer ungeraden Position miteinander ausgerichtet werden.

15. Vorrichtung (1) nach Anspruch 13 oder 14, wobei sich im Inneren des zentralen Körpers (45) mindestens drei Scheibenpaare (70, 72) befinden.

## Revendications

1. Appareil (1) pour le traitement de liquides, comprenant :
un corps tubulaire extérieur (10, 20, 30) avec une extension le long d'un axe longitudinal *a* ;
un conduit d'entrée (10) pour un écoulement d'eau ;
un conduit de sortie (20) de l'écoulement d'eau en communication fluidique avec ledit conduit d'entrée (10) ;
ledit conduit d'entrée (10) et ledit conduit de sortie (20) étant alignés le long dudit axe longitudinal a,
aux extrémités opposées dudit corps tubulaire extérieur (19, 20, 30) ;
un corps central (45) contenu dans une zone centrale à l'intérieur dudit corps tubulaire extérieur (10, 20, 30) et en contact avec ledit écoulement d'eau, le corps central (45) comprenant une pluralité de disques (40, 41, 42, 43, 44) concentrés et centrés longitudinalement le long dudit axe longitudinal a dudit corps tubulaire extérieur (10, 20, 30), chacun d'entre eux présentant une pluralité de trous (40a, 40b, 40c, 40d, 40e, 40f) agencés dans une couronne circulaire, chaque disque central (40, 41, 42, 43, 44) étant tourné d'un angle prédéterminé par rapport au disque central précédent (40, 41, 42, 43, 44) ;
**caractérisé en ce que** chaque disque central (40, 41, 42, 43, 44) comprend deux trous présents sur les surfaces opposées de chaque disque central (40, 41, 42, 43, 44) configurés pour loger un élément de verrouillage (50) ;
dans lequel chaque trou pour l'élément de verrouillage (50) de chaque disque central (40, 41, 42, 43, 44) détermine ledit angle de rotation partiel déterminé d'un disque (40, 41, 42, 43, 44) par rapport au disque central précédent (40, 41, 42, 43, 44) ;
chaque disque central (40, 41, 42, 43, 44) est contraint sur le disque central adjacent (40, 41, 42, 43, 44) par l'intermédiaire d'une goupille axiale (50).

2. Appareil (1) selon la revendication 1, dans lequel chaque trou (40a, 40b, 40c, 40d, 40e, 40f) des disques centraux (40, 41, 42, 43, 44) comporte un lamage (47) à l'extrémité de la sortie d'eau.

3. Appareil (1) selon la revendication 1 ou 2, dans lequel chaque disque central (40, 41, 42, 43, 44) comprend un trou central traversant (60) configuré pour faire passer un élément de jonction axial (30).

4. Appareil (1) selon la revendication 3, dans lequel ledit élément de jonction axial (30) est creux.

5. Appareil (1) selon la revendication 3 ou 4, dans lequel ledit élément de jonction axial (30) est configuré pour loger un ou plusieurs aimants (52) en son sein.

6. Appareil (1) selon l'une ou plusieurs des revendications précédentes, comprenant un élément convergent-divergent (11) en aval et/ou en amont dudit corps central (45) et traversé par l'écoulement d'eau.

7. Appareil (1) selon l'une ou plusieurs des revendications précédentes, comprenant un capuchon (22) ayant un siège (24) configuré pour être contraint à l'une des deux extrémités axiales dudit corps central (45) et une surface extérieure en contact fluidique avec l'eau entrant et/ou sortant dudit corps central (45).

8. Appareil (1) selon la revendication 7, dans lequel ledit capuchon (22) comprend un siège intérieur configuré pour loger un aimant (23).

9. Appareil (1) selon la revendication 7 ou 8, dans lequel le capuchon (22) comprend un filetage pour le verrouillage sur le corps central (45).

10. Appareil (1) selon l'une ou plusieurs des revendications précédentes 3 ou 4 à 10 lorsqu'il dépend de la revendication 3,
comprenant un élément de fermeture (26) ayant une protubérance axiale qui peut être contrainte à l'intérieur de l'élément de jonction axial (30).

11. Appareil (1) selon la revendication 10,
comprenant un élément de verrouillage se verrouillant au siège (24) du capuchon (22).

12. Appareil (1) selon l'une ou plusieurs des revendications précédentes, dans lequel les disques centraux (40, 41, 42, 43, 44) du corps central (45) et le disque d'entrée subissent un traitement de surface de galvanisation en argent.

13. Appareil (1) pour le traitement de liquides, comprenant :
un corps tubulaire extérieur (10, 20, 30) avec une extension le long d'un axe longitudinal *a ;*
un conduit d'entrée (10) pour l'écoulement d'eau ;
un conduit de sortie (20) de l'écoulement d'eau en communication fluidique avec ledit conduit d'entrée (10) ;
ledit conduit d'entrée (10) et ledit conduit de sortie (20) sont alignés le long dudit axe longitudinal a, aux extrémités opposées dudit corps tubulaire extérieur (19, 20, 30) ;
un corps central (45) contenu dans une zone centrale à l'intérieur dudit corps tubulaire extérieur (10, 20, 30) et en contact avec ledit écoulement d'eau, le corps central (45) comprenant une pluralité de paires de disques (70, 72) concentrées et centrées longitudinalement le long dudit axe longitudinal a dudit corps tubulaire extérieur (10, 20, 30),
chaque paire de disques (70, 72) comprend un premier disque (70) et un second disque (72),
le premier disque (70) comporte une pluralité de trous (70a, 70b, 70c) pour le passage de l'eau,
le second disque (72) comporte une pluralité de trous (72a, 72b, 72c) en connexion fluidique avec les trous (70a, 70b, 70c) du premier disque (70), chaque trou (70a, 70b, 70c) du premier disque (70) comportant une pluralité de bords (71) configurés pour briser la tension superficielle de l'eau entrante et chaque trou (72a, 72b, 72c) du second disque (72) comportant une chambre à effet Venturi ;
dans lequel chaque trou (70a, 70b, 70c) du premier disque (70) est partiellement conique et divergeant à partir de l'entrée de liquide vers la sortie ;
dans lequel chaque trou (72a, 72b, 72c) du second disque (72) présente, dans la section allant de l'entrée vers la sortie de l'écoulement de liquide, un premier biseau convergent (73), une partie centrale cylindrique (74) et un second biseau divergent (75) ;
**caractérisé en ce que** chaque disque (70, 72) comprend un trou (80) sur la zone périphérique, capable de recevoir une goupille pour le positionnement du premier disque (70) sur le second disque (72) ;

14. Appareil (1) selon la revendication 13, dans lequel les trous des paires de disques (70, 72) en position paire présents à l'intérieur du corps central (45) seront alignés l'un avec l'autre, tandis que les trous des paires de disques (70, 72) en position impaire seront alignés l'un avec l'autre.

15. Appareil (1) selon la revendication 13 ou 14, dans lequel il y a au moins trois paires de disques (70, 72) à l'intérieur du corps central (45).
